# EUROPEAN PATENT APPLICATION

(11) **EP 2 808 076 A1**
(43) Date of publication of application: **03.12.2014**
(21) Application number: 12866599.9
(22) Date of filing: 27.01.2012
(51) Int. Cl.: B01F 17/00, B01J 13/00, C02F 1/68

(54) **WATER FOR EMULSIFYING OIL, METHOD FOR PRODUCING WATER FOR EMULSIFYING OIL, AND METHOD AND APPARATUS FOR EMULSIFYING OIL**

(71) Applicant: Taane Co., Ltd., Miyagi 983-0852 (JP)
(72) Inventor: OIKAWA Taneaki, Sendai-shi Miyagi 983-0852 (JP); WATANABE Hiroe, Sendai-shi Miyagi 983-0852 (JP); KANNO Masako, Sendai-shi Miyagi 983-0852 (JP)
(74) Representative: Zimmermann & Partner
(86) International application number: PCT/JP2012/051842
(87) International publication number: WO 2013/111328

(57) **Abstract**

The purpose of the present invention is to provide: novel water for emulsifying oil; a method for producing water for emulsifying oil; and a method and an apparatus both for emulsifying oil with water.

[Solution] Water that can be used for emulsifying oil according to the present invention can be produced from: a combination of a metal hydride to which hydrogen has been bound in the form of its negative hydrogen ion (H⁻) and a hydroxide; a combination of a first type of metal hydride to which hydrogen has been bound in the form of a negative hydrogen ion (H⁻) and a second type of metal hydride to which hydrogen has been bound in the form of a negative hydrogen ion (H⁻); a combination of a metal hydride to which hydrogen has been bound in the form of a negative hydrogen ion (H⁻) and a hydride; a combination of a metal hydride and a mineral; a combination of a metal hydride to which hydrogen has been bound in the form of a negative hydrogen ion (H⁻) and hydrogen gas; or a combination of a metal hydride to which hydrogen has been bound in the form of a negative hydrogen ion (H⁻) and a metal.

## Description

### TECHNICAL FIELD

The present invention relates to water for emulsifying oil, a method of manufacturing water for emulsifying oil, and a method and apparatus for emulsifying oil.

### BACKGROUND

Emulsion fuels, in which water is added to fuel oil such as light oil, heavy oil, kerosene, have been gaining attention because of their ability to improve fuel efficiency in combustion, and to prevent generation of nitrogen oxides (NOx) etc. Examples known as emulsion fuels include an O/W type emulsion fuel to which a surfactant, emulsifier, or the like is added (Patent Document, JP-A-2011-140578, published on July 21, 2011, entitled "Emulsion fuel"). In addition, Patent Document (JP-A-2011-122035, published on June 23, 2011, entitled "Emulsion fuel system") discloses an emulsion fuel system that is capable of changing the amount of emulsion fuel to be generated, as desired. Emulsion in general means a state where oil is dispersed in water, or a state where water is dispersed in oil.

### SUMMARY OF THE INVENTION

Conventional methods for emulsifying oil require a surfactant. To stabilize emulsion, a large amount of surfactant is required, and there is an issue of increased cost. In addition, some heavy oil containing a surfactant is liquid at ordinary temperature, but some other heavy oil solidifies at ordinary temperature. In the latter case, emulsified heavy oil needs to be maintained above a certain temperature in order to deliver the oil through a pipe or the like, and thus dealing with emulsified oil has not always easy. If heavy oil or the like is used, an additional step for separating the heavy oil and the surfactant is required after delivery, and the treatment of the surfactant after separation is also an important issue.

In one aspect, the present invention provides novel water for emulsifying oil, a method of manufacturing water for emulsifying oil, and a method and apparatus for emulsifying oil.

In another aspect, the present invention provides a method and apparatus for emulsifying oil without using a surfactant.

Water used for emulsifying oil according to embodiments of the present invention comprises a combination of a metal hydride and a hydroxide, and at least a negative hydrogen ion (H⁻) has been bound to the metal hydride.

Water used for emulsifying oil according to embodiments of the present invention comprises a combination of a first type of metal hydride and a second type of metal hydride, and at least a negative hydrogen ion (H⁻) has been bound to the first type of metal hydride, and a negative hydrogen ion (H⁻) has been bound to the second type of metal hydride.

Water used for emulsifying oil according to embodiments of the present invention comprises a combination of a metal hydride and a hydride, and at least a negative hydrogen ion (H⁻) has been bound to the metal hydride.

Water used for emulsifying oil according to embodiments of the present invention comprises a combination of a metal hydride and a mineral, and at least a negative hydrogen ion (H⁻) has been bound to the metal hydride.

Water used for emulsifying oil according to embodiments of the present invention comprises a combination of a metal hydride and hydrogen gas, and at least a negative hydrogen ion (H⁻) has been bound to the metal hydride.

Water used for emulsifying oil according to embodiments of the present invention comprises a combination of a metal hydride and a metal, and at least a negative hydrogen ion (H⁻) has been bound to the metal hydride.

In a preferable aspect, the combination of the metal hydride and the hydroxide is selected from any of a combination of MgH₂ and Ca(OH)₂, a combination of CaH₂ and Mg(OH)₂, or a combination of MgH₂ and Na(OH)₂. In a preferable aspect, the combination of the first type of metal hydride and the second type of metal hydride is a combination of CaH₂ and MgH₂. In a preferable aspect, the combination of the metal hydride and the hydride is a combination of MgH₂ and NaBH₄. In a preferable aspect, the combination of the metal hydride and the mineral is a combination of MgH₂ and borax (Na₂[B₄O₅(OH)₄]•8H₂O). In a preferable aspect, the combination of the metal hydride and the hydrogen gas is a combination of CaH₂ and H₂. In a preferable aspect, the combination of the metal hydride and the metal is a combination of CaH₂ and Mg.

A method of manufacturing water used for emulsifying oil according to embodiments of the present invention comprises a step of adding to water a metal hydride and a hydroxide, and at least a negative hydrogen ion (H⁻) has been bound to the metal hydride.

A method of manufacturing water used for emulsifying oil according to embodiments of the present invention comprises a step of adding to water a first type of metal hydride and a second type of metal hydride, and at least a negative hydrogen ion (H⁻) has been bound to the first type of metal hydride, and a negative hydrogen ion (H⁻) has been bound to the second type of metal hydride.

A method of manufacturing water used for emulsifying oil according to embodiments of the present invention comprises a step of adding to water a metal hydride and a hydride, and at least a negative hydrogen ion (H⁻) has been bound to the metal hydride.

A method of manufacturing water used for emulsifying oil according to embodiments of the present invention comprises a step of adding to water a metal hydride and a mineral, and at least a negative hydrogen ion (H⁻) has been bound to the metal hydride.

A method of manufacturing water used for emulsifying oil according to embodiments of the present invention comprises a step of adding to water a metal hydride and hydrogen gas, and at least a negative hydrogen ion (H⁻) has been bound to the metal hydride.

A method of manufacturing water used for emulsifying oil according to embodiments of the present invention comprises a step of adding to water a metal hydride and a metal, and at least a negative hydrogen ion (H⁻) has been bound to the metal hydride.

In a preferable aspect, the method of manufacturing water further comprises, after the adding step, a step of removing positive ions from the water.

A method of manufacturing an emulsion material in which oil and water are emulsified according to embodiments of the present invention comprises a step of mixing the water according to any one of claims 1 to 12 and oil. In a preferable aspect, the manufacturing method further comprises, after the mixing step, a step of stirring. In a preferable aspect, the mixing step comprises a step of heating each of the heavy oil and the water. In a preferable aspect, the mixing step adds the oil to the water in which hydrogen is in its plasma state.

An apparatus for manufacturing an emulsion material in which oil and water are emulsified according to embodiments of the present invention comprises a first storage means for storing water used for emulsification, a second storage means for storing oil, and a mixing means for mixing the water stored in the first storage means and the oil stored in the second storage means. In a preferable aspect, the manufacturing apparatus, if the oil is heavy oil, further comprises a heating means for heating the water stored in the first storage means and the oil stored in the second storage means. In a preferable aspect, the mixing means adds the oil to the water.

According to embodiments of the present invention, unlike conventional methods, oil can be emulsified by using water that is generated relatively readily and at a low cost, and without using a surfactant. In addition, according to embodiments of the present invention, emulsified oil can be retained for a long period at ordinary temperature without being solidified. Ionized hydrogen water that can be used for emulsification meets drinking water requirements, and thus the water is readily treated after separation, and the water is safe and environmental pollution-free.

### BRIEF DESCRIPTION OF THE DRAWINGS

The more complete understanding of the present invention, and the advantages thereof, reference is now made to the following descriptions taken in conjunction with the accompanying drawing, in which:
Fig. 1A is a flowchart illustrating steps of manufacturing ionized hydrogen water for emulsification according to an embodiment of the present invention;
Fig. 1B is a flowchart illustrating a step of manufacturing ionized hydrogen water for emulsification according to another embodiment of the present invention;
Fig. 2 is a table illustrating examples of a combination of substances used for ionized hydrogen water for emulsification according to embodiments of the present invention;
Fig. 3A is a flowchart illustrating steps of generating an emulsion material using ionized hydrogen water for emulsification according to embodiments of the present invention;
Fig. 3B is a flowchart illustrating steps of generating an emulsion material using ionized hydrogen water for emulsification according to another embodiment of the present invention;
Fig. 4 is a photo illustrating a state in which general tap water and heavy oil are mixed;
Fig. 5A is a photo illustrating a state in which ionized hydrogen water for emulsification, to which a combination of a metal hydride (MgH₂) and a metal hydroxide (Na(OH)₂) has been added according to embodiments of the present invention, and heavy oil are mixed;
Fig. 5B is an enlarged photo of Fig. 5A magnified 400 times;
Fig. 5C is an enlarged photo about two months after Fig. 5B;
Fig. 6A is a photo illustrating a state in which ionized hydrogen water for emulsification, to which a combination of MgH₂ and borax (Na₂[B₄O₅(OH)₄]•8H₂O) has been added according to embodiments of the present invention, and heavy oil are mixed;
Fig. 6B is an enlarged photo of Fig. 6A magnified 400 times;
Fig. 6C is an enlarged photo about two months after Fig. 6B;
Fig. 7A is a photo illustrating a state in which ionized hydrogen water for emulsification, to which a combination of MgH₂ and a metal hydroxide (Ca(OH)₂) has been added according to embodiments of the present invention, and heavy oil are mixed;
Fig. 7B is an enlarged photo of Fig. 7A magnified 400 times;
Fig. 7C is an enlarged photo about two months after Fig. 7B;
Fig. 8A is a photo illustrating a state in which ionized hydrogen water for emulsification, to which a combination of a metal hydride (CaH₂) and a hydroxide (Mg(OH)₂) has been added according to embodiments of the present invention, and heavy oil are mixed;
Fig. 8B is an enlarged photo of Fig. 8A magnified 400 times;
Fig. 8C is an enlarged photo about two months after Fig. 8B;
Fig. 9A is a photo illustrating a state in which ionized hydrogen water for emulsification, to which a combination of a metal hydride (MgH₂) and a hydride (NaBH₄) has been added according to embodiments of the present invention, and heavy oil are mixed;
Fig. 9B is an enlarged photo of Fig. 9A magnified 400 times;
Fig. 9C is an enlarged photo about two months after Fig. 9B;
Fig. 10A is a photo illustrating a state in which ionized hydrogen water for emulsification, to which a combination of a metal hydride (CaH₂) and a metal magnesium (Mg) has been added according to embodiments of the present invention, and heavy oil are mixed;
Fig. 10B is an enlarged photo of Fig. 10A magnified 400 times;
Fig. 10C is an enlarged photo about two months after Fig. 10B;
Fig. 11A is a photo illustrating a state in which ionized hydrogen water for emulsification, to which a combination of a metal hydride (CaH₂) and hydrogen gas (H₂) has been added according to embodiments of the present invention, and heavy oil are mixed;
Fig. 11B is an enlarged photo of Fig. 11A magnified 400 times;
Fig. 11C is an enlarged photo about two months after Fig. 11B;
Fig. 12A is a photo illustrating a state in which ionized hydrogen water for emulsification, to which a combination of a first type of metal hydride (CaH₂) and a second type of metal hydride (MgH₂) has been added according to embodiments of the present invention, and heavy oil are mixed;
Fig. 12B is an enlarged photo of Fig. 12A magnified 400 times;
Fig. 12C is an enlarged photo about two months after Fig. 12B; and
Fig. 13 is a block diagram illustrates a schematic configuration of an apparatus for manufacturing an emulsion material according to embodiments of the present invention.

### DETAILED DESCRIPTION OF ILLUSTRATIVE EMBODIMENTS

Embodiments for implementing the invention are described in detail with reference to the accompanying drawings. In embodiments of the present invention, an example in which heavy oil (crude oil) is emulsified is illustrated as a preferable aspect. However, this is for illustrative purpose only, and the present invention is not limited to such aspects. In addition, although metal hydrides such as CaH₂ or MgH₂ are illustrated in embodiments of the present invention, these are for illustration only, and any other metal hydride may be used without departing from the spirit or scope of the invention. The metal hydride may be preferably an alkali metal, an alkali earth metal, or a metal in group 13 or group 14 of the periodic table.

In embodiments of the present invention, it is considered that by adding to water an ionically-bound metal hydride, to which a negative hydrogen ion (H⁻) being bound, hydrogen can be changed into protium, in other words, charge exchange between hydrogen atoms can be occurred as in H₂⇔2H⁰, H⁺⇔ H0, H₂⇔2H⁻, H⁺⇔H⁻. This cases hydrogen on a surface of the structure of the metal hydride to be changed into protium, as in H+ ⇔H0⇔H⁻, and the water treated with the metal hydride contains negative hydrogen ions (H⁻). In such water, hydrogen is in its plasma state at ordinary temperature. The water in which hydrogen is in its plasma state is referred therein to ionized hydrogen water.

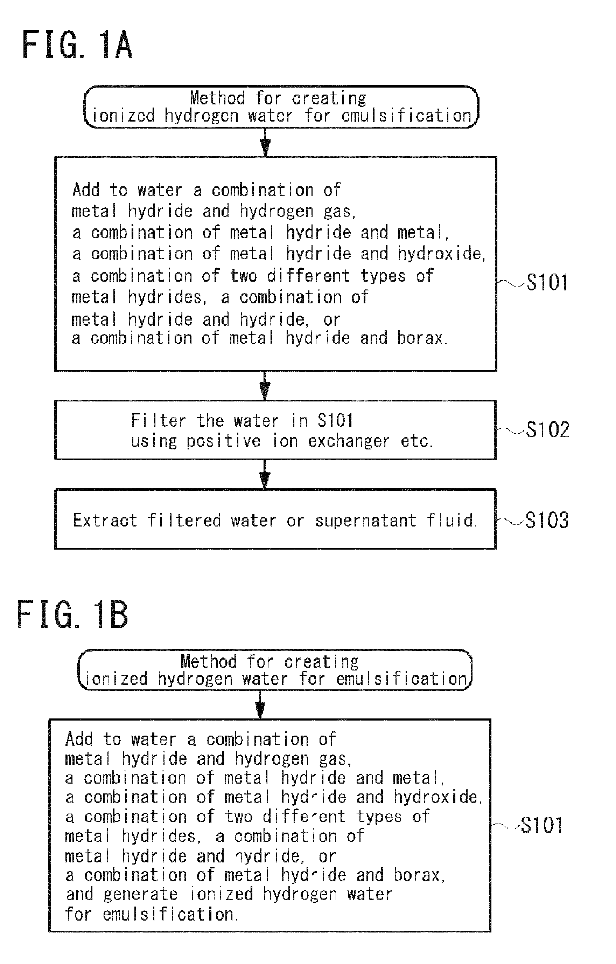

Fig. 1A is a flowchart illustrating a way of creating emulsified water in which oil is emulsified (referred hereafter to ionized hydrogen water for emulsification) according to an embodiment of the present invention. The oil to be emulsified may include, but not limited to, heavy oil, light oil, vegetable oil (for example, chili oil, rice-bran oil, vegetable oil, olive oil, neem oil, perilla oil, linseed oil, grape seed oil, sesame oil, or the like), animal fat (for example, beef tallow), fish oil, or other oil.

As illustrated in Step S101 in Fig. 1A, water (for example, ultrapure water, tap water, mineral water) is prepared, and a metal hydride or the like is added to the water to generate ionized hydrogen water or negative hydrogen ion water, in which negative hydrogen ions are in plasma state at ordinary temperature. Particularly in a case where heavy oil is to be emulsified, it is desirable to use ultrapure water to generate ionized hydrogen water.

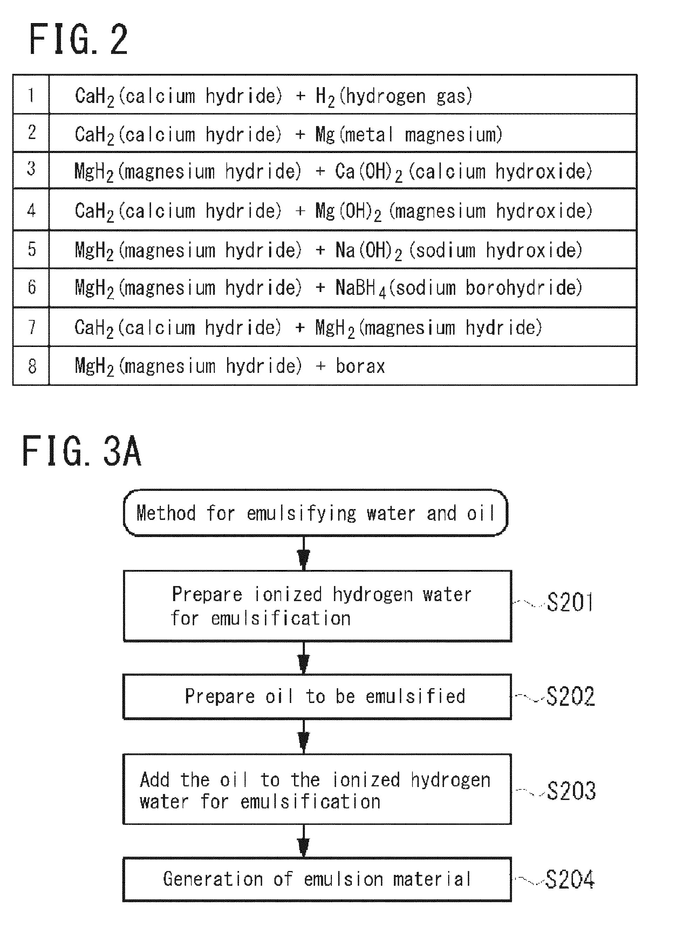

In a first preferable aspect, a metal hydride and hydrogen gas are added to water. The metal hydride is a metal to which hydrogen has been bound in the form of its negative hydrogen ion (H⁻). For example, as shown in Fig. 2, a combination of a calcium hydride (CaH₂) and hydrogen gas (H₂) are added and a negative hydrogen ion (H⁻) has been ionically bound to the calcium hydride. The metal hydride, however, may be any other metal hydride such as a magnesium hydroxide (MgH₂). In this aspect, the ionized hydrogen water was generated under conditions of: 2.0 g of calcium hydride and hydrogen gas being added to 1 liter of water at room temperature (20 degrees Celsius).

In a second preferable aspect, a combination of a metal hydride and a metal is added to water. For example, as shown in Fig. 2, a combination of a calcium hydride (CaH₂) and a metal magnesium (Mg) is added. Conditions in this aspect may be: 2.0 g of calcium hydride and 2.0 g of metal magnesium being added to 1 liter of water at room temperature (20 degrees Celsius). Other than metal magnesium, a metal that generates hydrogen may be used instead.

In a third preferable aspect, a combination of a metal hydride and a hydroxide is added. As shown in Fig. 2, a combination of a magnesium hydride (MgH₂) and a calcium hydroxide (Ca(OH)₂), or a combination of a calcium hydride (CaH₂) and a magnesium hydroxide (Mg(OH)₂), or a combination of a magnesium hydride (MgH₂) and a sodium hydroxide (Na(OH)₂) may be added. Conditions in this aspect may be: 2.0 g of metal hydride and 2.0 g of hydroxide being added to 1 liter of water at room temperature (20 degrees Celsius).

In a fourth preferable aspect, a combination of a metal hydride and a hydride is added. As illustrated in Fig. 2, a combination of a magnesium hydride (MgH₂) and a sodium borohydride (NaBH₄) may be added. Conditions in this aspect may be: 2.0 g of metal hydride and 2.0 g of hydride being added to 1 liter of water at room temperature (20 degrees Celsius).

In a fifth preferable aspect, a combination of two different types of metal hydrides is added. As shown in Fig. 2, a combination of a calcium hydride (CaH₂) and a magnesium hydride (MgH₂) may be added. Conditions in this aspect may be: 2.0 g of each of metal hydrides being added to 1 liter of water at room temperature (20 degrees Celsius).

In a sixth preferable aspect, as shown in Fig. 2, a combination of a metal hydride and a borax is added. Conditions in this aspect may be: 2.0 g of metal hydride and 2.0 g of borax being added to 1 liter of water at room temperature (20 degrees Celsius).

The water generated in Step S101 is then filtered using a positive ion exchanger or the like, as illustrated in Step S102 in Fig. 1A. In a case where the combination of a calcium hydride (CaH₂) and hydrogen gas (H₂) is added according to the first preferable aspect, positive ions, Ca²⁺, H⁺, are removed by adsorption.

In a case where the combination of a calcium hydride (CaH₂) and a metal magnesium (Mg) is added according to the second preferable aspect, positive ions, Ca²⁺, Mg²⁺, H⁺, are removed by adsorption. In a case where the combination of a magnesium hydride (MgH₂) and a calcium hydroxide (Ca(OH)₂) is added according to the third preferable aspect, positive ions, Mg²⁺, Ca²⁺, H⁺, are removed by adsorption. Also for the water generated according to the fourth to sixth aspects, adsorption-removal is done similarly. The positive ions described above, however, need not be completely removed, and one or more positive ions described above may remain in the ionized hydrogen water. In addition, if a positive ion exchange resin is used, the particles of the emulsified oil will become finer, and a more stable emulsification can be achieved.

As illustrated in Step S103 in Fig. 1A, filtered water or supernatant fluid is extracted to generate the ionized hydrogen water for emulsification. Although a positive ion exchanger is used in Step S102 in the example illustrated in Fig. 1A, the positive ion exchanger is not essential, and the ionized hydrogen water for emulsification can be generated (S101) without using a positive ion exchanger as illustrated in Fig. 1B.

A method for emulsifying oil using the ionized hydrogen water for emulsification generated in steps as in Fig. 1A or Fig. 1B is now described.

Fig. 3A is a flowchart illustrating steps of emulsification according to a first preferable aspect. First, ionized hydrogen water for emulsification is prepared as described above (S201), and then oil to be emulsified is prepared (S202). If the oil solidifies at ordinary temperature, the oil is heated at a certain temperature to liquefy the oil.

Then, the oil is added to a container that contains the ionized hydrogen water for emulsification (S203). A requirement is that the oil is added to the ionized hydrogen water for emulsification. Experiments have found that a far more stable emulsion can be obtained by adding the oil to the ionized hydrogen water for emulsification than adding the ionized hydrogen water for emulsification to the oil.

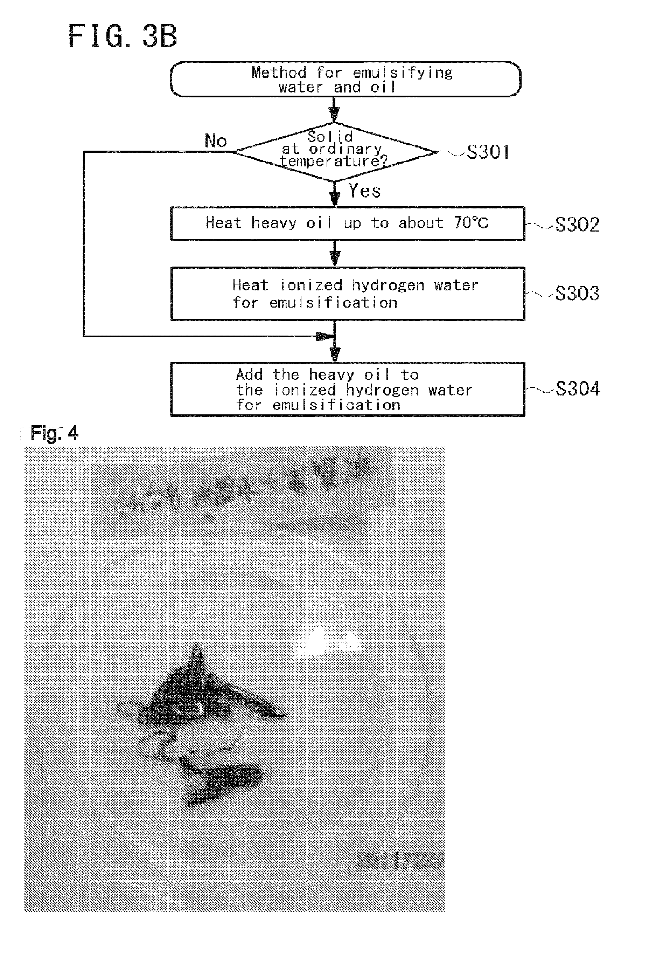

Fig. 3B is a flowchart illustrating steps of emulsification according to a second preferable aspect. In this aspect, the steps are illustrated in a case where the oil to be emulsified is heavy oil that solidify at ordinary temperature. First, if the heavy oil is solid at ordinary temperature (S301), the heavy oil is heated up to about 70 degrees Celsius (S302) to liquefy the oil. Then, the ionized hydrogen water for emulsification is also heated up to a certain temperature, for example, about 70 degrees Celsius, as high as the temperature of the heavy oil (S303). The heavy oil is then added to a container that contains the ionized hydrogen water for emulsification (S304). Since the ionized hydrogen water for emulsification is heated, lowering the temperature of the heavy oil and its solidification can be prevented, and the heavy oil can be well emulsified.

The amount of the calcium hydride, metal magnesium, metal hydride, hydroxide, or borax to be added is 2.0 g in the first to sixth aspects described above, however, it should be noted that this amount is merely a value used for the experiment. The amount of the substances such as metal hydride, hydroxide, borax, or the like to be added may be selected as appropriate, for example, depending on the amount of the oil to be emulsified.

Advantages according to embodiments of the invention are now described. As a comparison example, Fig. 4 illustrates a state in which both of general tap water and heavy oil are heated up to around 70 degrees Celsius, and then the heavy oil is added to the water. As can be seen from Fig. 4, the heavy oil does not mixed at all, and is not emulsified.

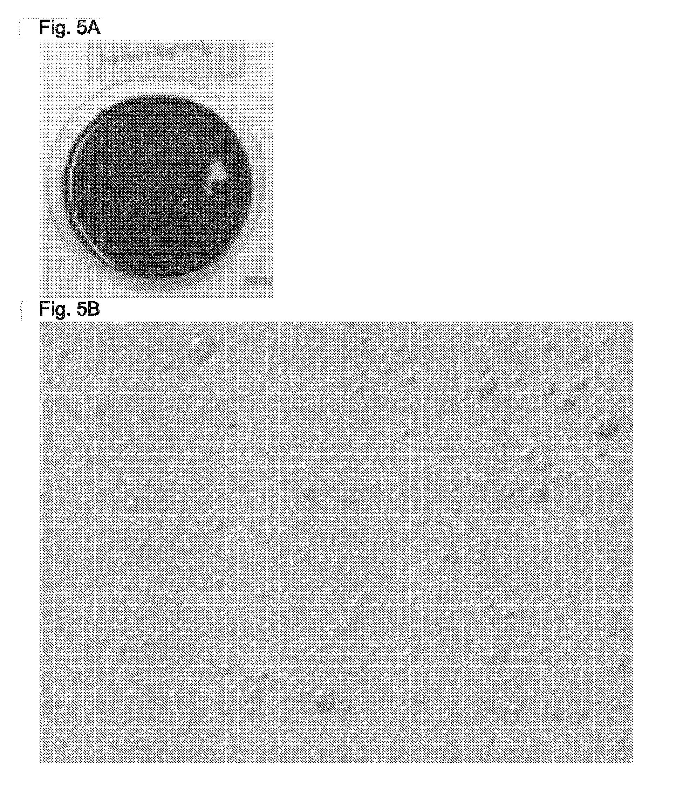

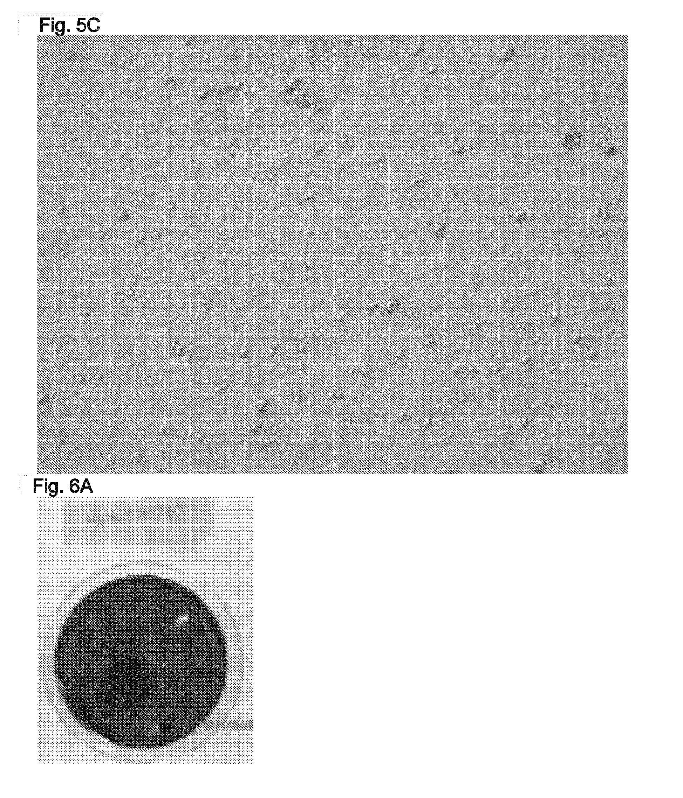

Figs. 5A to 5C are photos illustrating emulsified heavy oil according to an embodiment. In this embodiment, a combination of a metal hydride (MgH₂) and a hydroxide (Na(OH)₂) is added to the ionized hydrogen water for emulsification. Both of the ionized hydrogen water for emulsification and the heavy oil are heated up to around 70 degrees Celsius, and then the heavy oil is added to the ionized hydrogen water for emulsification. Fig. 5A illustrates a state when they are mixed together. Fig. 5B is an enlarged photo of Fig. 5A magnified 400 times. As can be seen from Fig. 5B, the heavy oil is separated into fine particles, and the heavy oil is emulsified from the moment the ionized hydrogen water for emulsification and the heavy oil are mixed together. The particle size is about 5 µm to 0.1 µm. Fig. 5C is an enlarged photo magnified 400 times after about two months have elapsed from the state of Fig. 5A. As can be seen from Fig. 5C, the particles of the heavy oil are broken down into finer pieces. In addition, the emulsified heavy oil is kept liquid and does not solidify at ordinary temperature.

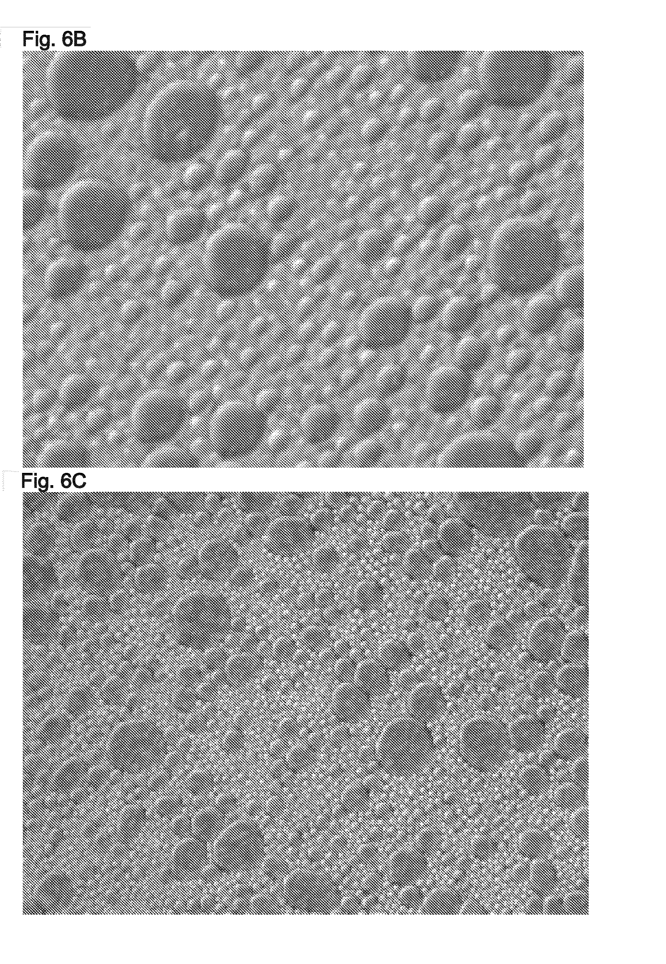

Fig. 6A illustrates a state in which ionized hydrogen water for emulsification, to which a combination of a metal hydride (MgH₂) and a borax (NaBH₄) has been added, and heavy oil are mixed together. Fig. 6B is an enlarged photo of Fig. 6A magnified 400 times. Fig. 6C is an enlarged photo magnified 400 times after about two months have elapsed since the mixture. It can be found also in this example that the heavy oil is emulsified from the moment the heavy oil is added into the ionized hydrogen water for emulsification, and the heavy oil and the water are mixed together, and the particles of the oil are broken down into finer pieces. In addition, as can be seen from Fig. 6C, the particle size of the heavy oil becomes smaller over time.

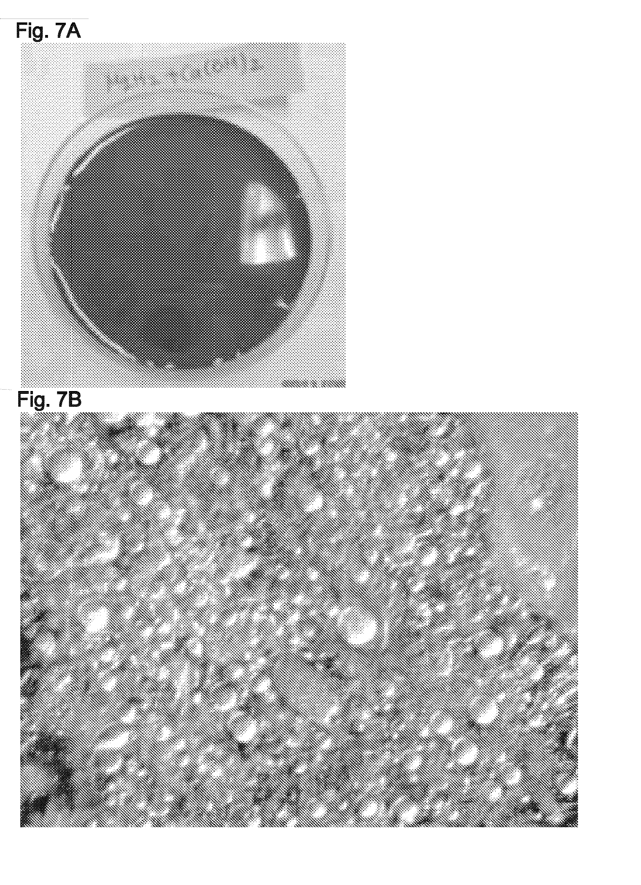

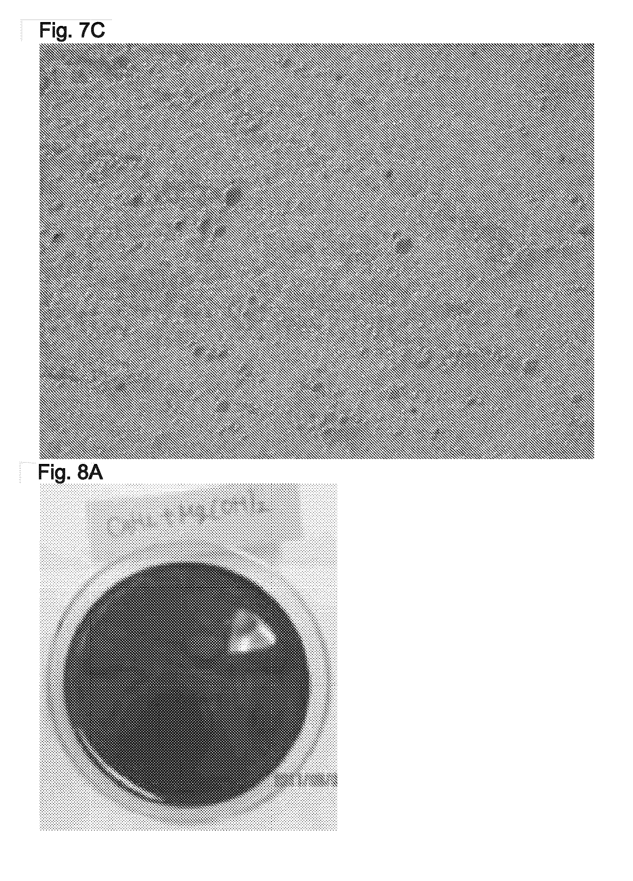

Fig. 7A illustrates a state in which ionized hydrogen water for emulsification, to which a combination of a metal hydride (MgH₂) and a hydroxide (Ca(OH)₂) has been added, and heavy oil are mixed together. Fig. 7B is an enlarged photo of Fig. 7A magnified 400 times. Fig. 7C is an enlarged photo magnified 400 times after about two months have elapsed since the mixture. It can be found also in this case that the heavy oil is emulsified from the moment the heavy oil is added into the ionized hydrogen water for emulsification, and the heavy oil and water are mixed together, and the heavy oil is separated into fine particles. In addition, as illustrated in Fig. 7C, the particle size of the heavy oil becomes smaller over time.

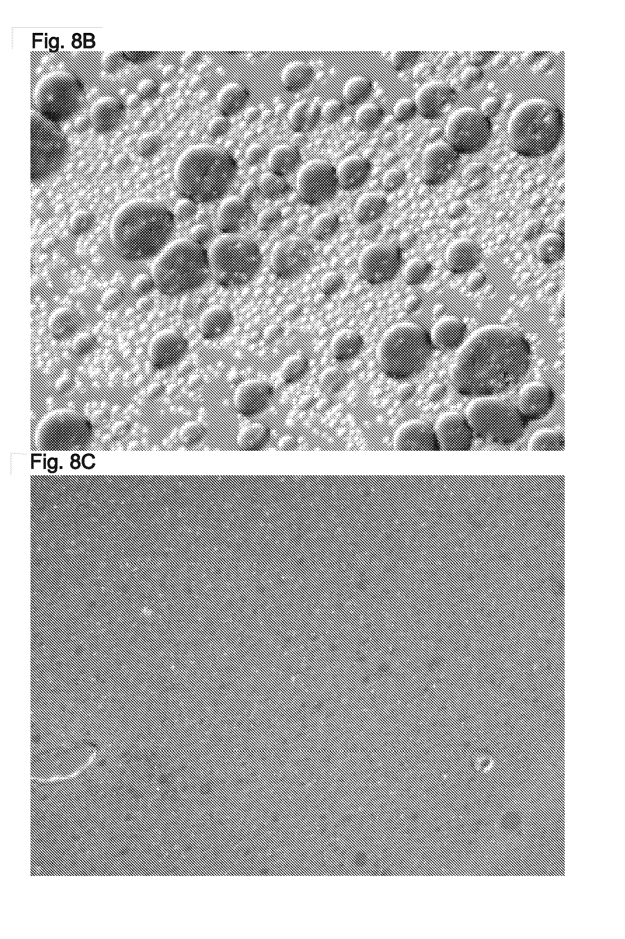

Fig. 8A illustrates a state in which ionized hydrogen water for emulsification, to which a combination of a metal hydride (CaH₂) and a hydroxide (Mg(OH)₂) has been added, and heavy oil are mixed together. Fig. 8B is an enlarged photo of Fig. 8A magnified 400 times. Fig. 8C is an enlarged photo magnified 400 times after about two months have elapsed since the mixture. It can be found also in this case that the heavy oil is preferably emulsified similarly to those described above.

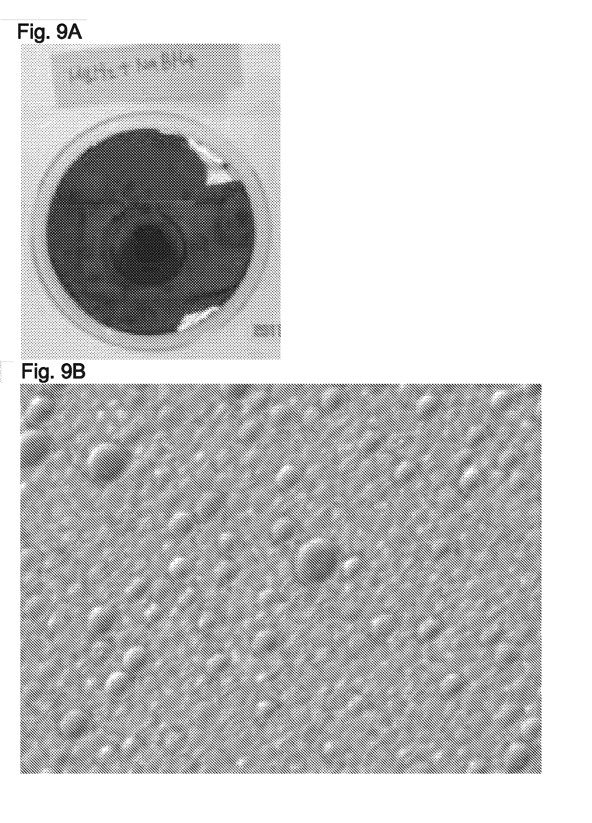

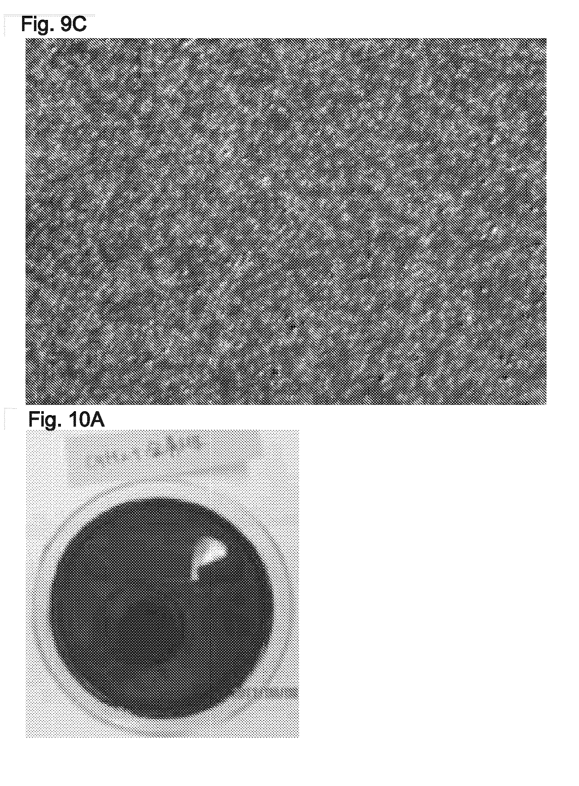

Fig. 9A illustrates a state in which ionized hydrogen water for emulsification, to which a combination of a metal hydride (MgH₂) and a hydride (NaBH₄) has been added, and heavy oil are mixed together. Fig. 9B is an enlarged photo of Fig. 9A magnified 400 times. Fig. 9C is an enlarged photo magnified 400 times after about two months have elapsed since the mixture. It can be found also in this case that the heavy oil is preferably emulsified similarly to those described above.

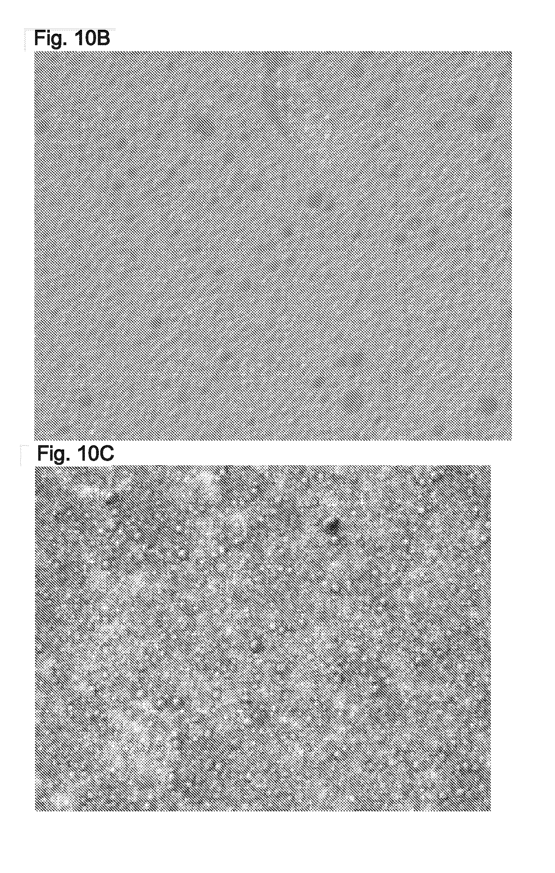

Fig. 10A illustrates a state in which ionized hydrogen water for emulsification, to which a combination of a metal hydride (CaH₂) and a metal magnesium (Mg) has been added, and heavy oil are mixed together. Fig. 10B is an enlarged photo of Fig. 10A magnified 400 times. Fig. 10C is an enlarged photo magnified 400 times after about two months have elapsed since the mixture. It can be found also in this case that the heavy oil is preferably emulsified similarly to those described above.

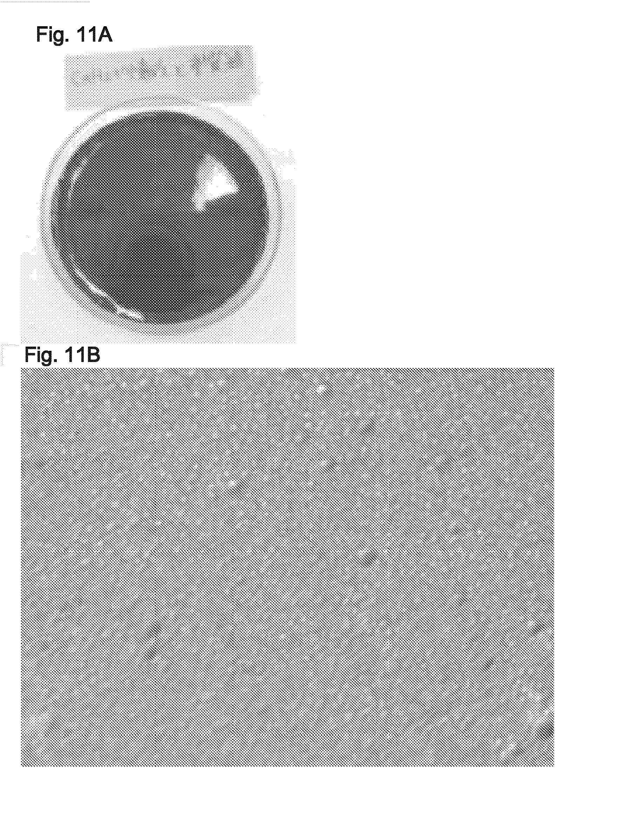

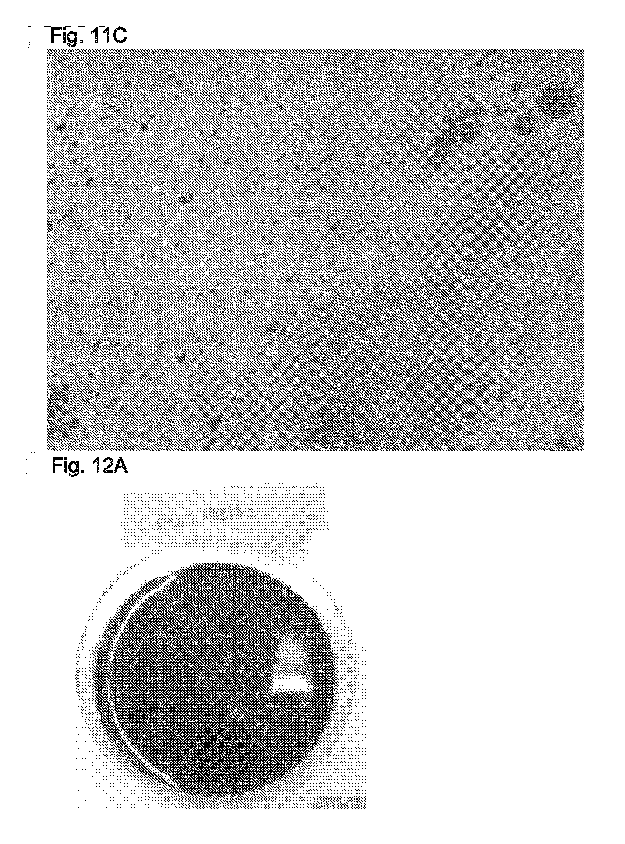

Fig. 11A illustrates a state in which ionized hydrogen water for emulsification, to which a combination of a metal hydride (CaH₂) and hydrogen gas (H₂) has been added, and heavy oil are mixed together. Fig. 11B is an enlarged photo of Fig. 11A magnified 400 times. Fig. 11C is an enlarged photo magnified 400 times after about two months have elapsed since the mixture. It can be found also in this case that the heavy oil is preferably emulsified similarly to those described above.

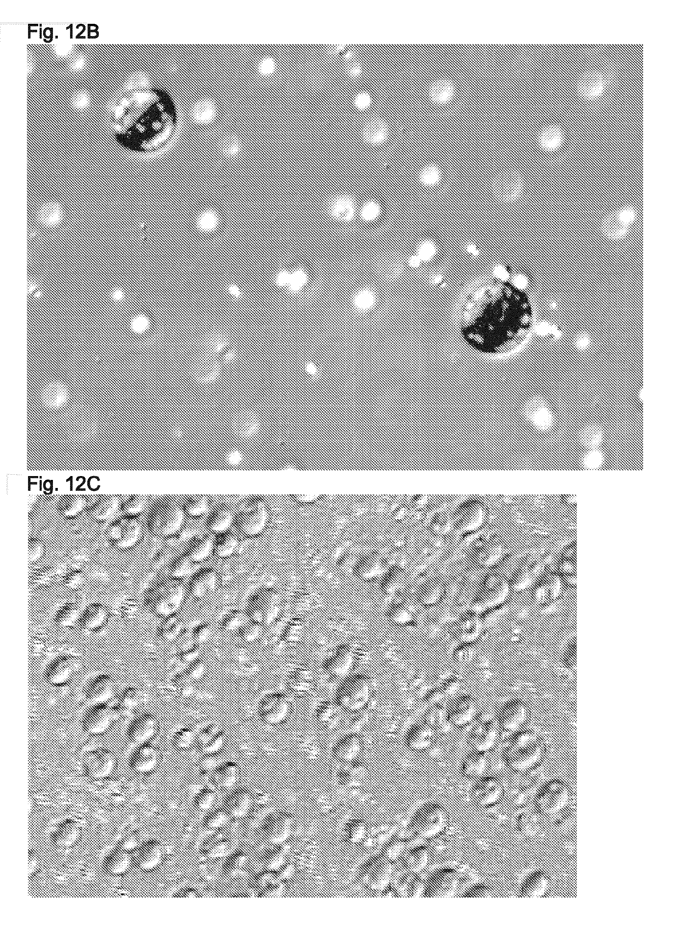

Fig. 12A illustrates a state in which ionized hydrogen water for emulsification, to which a combination of a first type of metal hydride (CaH₂) and a second type of metal hydride (MgH₂) has been added, and heavy oil are mixed together. Fig. 12B is an enlarged photo of Fig. 12A magnified 400 times. Fig. 12C is an enlarged photo magnified 400 times after about two months have elapsed since the mixture. It can be found also in this case that the heavy oil is preferably emulsified similarly to those described above.

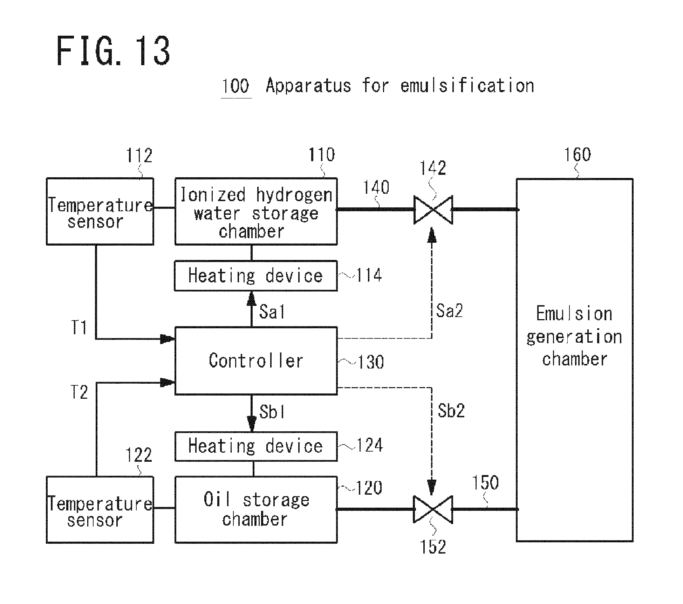

Fig. 13 illustrates an example configuration of an apparatus for emulsification according to embodiments of the present invention. An apparatus for emulsification 100 of an embodiment may comprise an ionized hydrogen water storage chamber 110 for storing ionized hydrogen water for emulsification of the embodiment, a temperature sensor 112 for detecting the temperature of the ionized hydrogen water stored in the ionized hydrogen water storage chamber 110, a heating device 114 for heating the ionized hydrogen water in the ionized hydrogen water storage chamber 110, an oil storage chamber 120 for storing oil, a temperature sensor 124 for detecting the temperature of the oil in the oil storage chamber 120, a controller 130, a delivery pipe140 for delivering the ionized hydrogen water from the water storage chamber 110, a valve142 for controlling the flow rate of the ionized hydrogen water delivered through the delivery pipe140, a delivery pipe150 for delivering the oil from the oil storage chamber 120, a valve152 for controlling the flow rate of the oil through the delivery pipe150, and an emulsion generation chamber 160 for mixing the ionized hydrogen water and the oil and generating emulsified oil.

The controller 130 controls the apparatus for emulsification 100, and preferably may be composed of a computer device, microcontroller, or the like. The controller 130 may further preferably comprise a memory for storing a program for controlling a sequence or action of each component, and the program is executed by the controller 130. In a preferable aspect, the temperature sensor 112 detects the temperature of the ionized hydrogen water in the ionized hydrogen water storage chamber 110, and provides a detection signal T1 to the controller 130, and the temperature sensor 122 detects the temperature of the oil in the oil storage chamber 120, and provides a detection signal T2 to the controller 130. The controller 130 outputs to the heating device 114 based on the detection signal T1 a control signal Sa1 for controlling the temperature of the ionized hydrogen water in the ionized hydrogen water storage chamber 110, and outputs to the heating device 124 based on the detection signal T2 a control signal Sa2 for controlling the temperature of the oil in the oil storage chamber 120. As described above, if the oil to be emulsified is heavy oil, the temperature of each of the ionized hydrogen water and the heavy oil is controlled to be at a temperature around 70 degrees Celsius.

In a further preferable aspect, the controller 130 opens the valve142, and provides a certain amount of ionized hydrogen water to the emulsion generation chamber 160. The controller 130 then closes the valve142, and opens the valve152, and provides a certain amount of oil to the emulsion generation chamber 160. Experiments have found that to provide the oil to the ionized hydrogen water will more effectively emulsify the oil than a case where the ionized hydrogen water is provided to the oil. In a further preferable aspect, the emulsion generation chamber 160 may comprise a stirring device so that the ionized hydrogen water and oil are well mixed together. The stirring device may have a vibration function that provides a certain vibration to the container, or a stirring function with use of a spatula or the like. Although a positive ion exchanger for removing positive ions is not shown in Fig. 13, the emulsion generation chamber 160 may comprise a positive ion exchanger if used.

While preferred embodiments of the present invention have been illustrated in detail, it should not be construed that the present invention is not limited to specific embodiments, and various other modifications and alternations may be made without departing from the scope and the spirit of the invention.

### Description of references in drawings

100: Apparatus for emulsification
110: Ionized hydrogen water storage chamber
112, 122: Temperature sensor
114, 124: Heating device
120: Oil storage chamber
130: Controller
140, 150: Delivery pipe
142, 152: Valve
160: Emulsion generation chamber

## Claims

1. Water used for emulsifying oil, the water comprising:
a combination of a metal hydride and a hydroxide, to the metal hydride at least a negative hydrogen ion (H⁻) being bound.

2. Water used for emulsifying oil, the water comprising:
a combination of a first type of metal hydride and a second type of metal hydride, to the first type of metal hydride at least a negative hydrogen ion (H⁻) being bound, and to the second type of metal hydride to a negative hydrogen ion (H⁻) being bound.

3. Water used for emulsifying oil, the water comprising:
a combination of a metal hydride and a hydride, to the metal hydride at least a negative hydrogen ion (H⁻) being bound.

4. Water used for emulsifying oil, the water comprising:
a combination of a metal hydride and a mineral, to the metal hydride at least a negative hydrogen ion (H⁻) being bound.

5. Water used for emulsifying oil, the water comprising:
a combination of a metal hydride and hydrogen gas, to the metal hydride at least a negative hydrogen ion (H⁻) being bound.

6. Water used for emulsifying oil, the water comprising:
a combination of a metal hydride and a metal, to the metal hydride at least a negative hydrogen ion (H⁻) being bound.

7. The water according to claim 1, wherein the combination of the metal hydride and the hydroxide is selected from any of a combination of MgH₂ and Ca(OH)₂, a combination of CaH₂ and Mg(OH)₂, or a combination of MgH₂ and Na(OH)₂.

8. The water according to claim 2, wherein the combination of the first type of metal hydride and the second type of metal hydride is CaH₂ and MgH₂.

9. The water according to claim 3, wherein the combination of the metal hydride and the hydride is MgH₂ and NaBH₄.

10. The water according to claim 4, wherein the combination of the metal hydride and the mineral is MgH₂ and borax (Na₂[B₄O₅(OH)₄]•8H₂O).

11. The water according to claim 5, wherein the combination of the metal hydride and the hydrogen gas is CaH₂ and H₂.

12. The water according to claim 6, wherein the combination of the metal hydride and the metal is CaH₂ and Mg.

13. A method of manufacturing water used for emulsifying oil, the method comprising a step of:
adding to water a metal hydride and a hydroxide, to the metal hydride at least a negative hydrogen ion (H⁻) being bound.

14. A method of manufacturing water used for emulsifying oil, the method comprising a step of:
adding to water a first type of metal hydride and a second type of metal hydride, to the first type of metal hydride at least a negative hydrogen ion (H⁻) being bound, and to the second type of metal hydride a negative hydrogen ion (H⁻) being bound.

15. A method of manufacturing water used for emulsifying oil, the method comprising a step of:
adding to water a metal hydride and a hydride, to the metal hydride at least a negative hydrogen ion (H⁻) being bound.

16. A method of manufacturing water used for emulsifying oil, the method comprising a step of:
adding to water a metal hydride and a mineral, to the metal hydride at least a negative hydrogen ion (H⁻) being bound.

17. A method of manufacturing water used for emulsifying oil, the method comprising a step of:
adding water a metal hydride and hydrogen gas, to the metal hydride at least a negative hydrogen ion (H⁻) being bound.

18. A method of manufacturing water used for emulsifying oil, the method comprising a step of:
adding to water a metal hydride and a metal, to the metal hydride at least a negative hydrogen ion (H⁻) being bound.

19. The method according to claim 13, wherein the metal hydride and the hydroxide is selected from any of a combination of MgH₂ and Ca(OH)₂, a combination of CaH₂ and Mg(OH)₂, or a combination of MgH₂ and Na(OH)₂.

20. The method according to claim 14, wherein the first type of metal hydride and the second type of metal hydride are CaH₂ and MgH₂.

21. The method according to claim 15, wherein the combination of metal hydride and the hydride are MgH₂ and NaBH₄.

22. The method according to claim 16, wherein the combination of metal hydride and the mineral are MgH₂ and borax (Na₂[B₄O₅(OH)₄]•8H₂O).

23. The method according to claim 17, wherein the metal hydride and the hydrogen gas are CaH₂ and H₂.

24. The method according to claim 18, wherein the metal hydride and the metal are CaH₂ and Mg.

25. The method of manufacturing water according to any one of claims 13 to 24 further comprises a step of:
after the adding step, removing positive ions from the water.

26. A method of manufacturing an emulsion material that includes oil and water being emulsified, the method comprising a step of:
mixing the water according to any one of claims 1 to 12 and the oil.

27. The method according to claim 26, wherein the method further comprises a step of:
after the step of mixing, stirring.

28. The method according to claim 26 or 27, wherein the step of mixing comprises a step of:
heating each of the heavy oil and the water.

29. The method according to any one of claims 25 to 28, wherein the step of mixing adds the oil into the water that includes hydrogen which is in its plasma state.

30. An apparatus for manufacturing an emulsion material that includes oil and water being emulsified, wherein the apparatus comprises:
a first storage means for storing the water according to any one of claims 1 to 12 and oil,
a second storage means for storing the oil, and
a mixing means for mixing the water stored in the first storage means and the oil stored in the second storage means.

31. The manufacturing apparatus according to claim 30, further comprising:
if the oil is heavy oil, a heating means for heating the water stored in the first storage means and the oil stored in the second storage means.

32. The manufacturing apparatus according to claim 30 or 31, wherein the mixing means adds the oil into the water.
